# EUROPÄISCHE PATENTANMELDUNG

(11) **EP 3 858 771 A1**
(43) Veröffentlichungstag der Anmeldung: **04.08.2021**
(21) Anmeldenummer: 20154158.8
(22) Anmeldetag: 28.01.2020
(51) Int. Cl.: B65H 23/04, B65H 23/188

(54) **TÄNZER-BASIERTE BAHNZUGREGELUNG UND KASKADENREGELUNGSSYSTEM**

(71) Anmelder: Siemens Aktiengesellschaft, 80333 München (DE)
(72) Erfinder: Popp, Johannes, 91052 Erlangen (DE); Schäfers, Elmar, 90763 Fürth (DE); Seelinger, Bjoern, 91315 Höchstadt (DE); Vogel, Theo, 91327 Gößweinstein (DE)

(57) **Zusammenfassung**

Die Erfindung betrifft ein Verfahren zur Tänzer-basierten Bahnzugregelung sowie ein Kaskadenregelungssystem.

Es wird ein Kaskadenregelungssystem für eine Tänzer-basierte Bahnzugregelung vorgeschlagen, umfassend eine unterlagerte Geschwindigkeitsregelung zur Regelung einer Bewegungsgeschwindigkeit eines aktiven Tänzersystems, sowie eine der unterlagerten Geschwindigkeitsregelung überlagerte Zugkraftregelung zur Regelung einer Bahnzugkraft. Es wird ferner ein entsprechendes Verfahren zur Tänzer-basierten Bahnzugregelung vorgeschlagen, wobei ein aktives Tänzersystem durch Einleiten einer Kraft eines Motors eine auf eine Warenbahn wirkende Bahnzugkraft beeinflusst.

## Beschreibung

Die Erfindung betrifft ein Verfahren zur Tänzer-basierten Bahnzugregelung sowie ein Kaskadenregelungssystem.

In der industriellen Automatisierung werden für Wickel-, Druck- oder Stapelprozesse durchlaufende Warenbahnen in Maschinen, wie Wickel-, Druck- oder Stackingmaschinen, bearbeitet. Beispielsweise werden Lithium-Ionen-Batterien hergestellt, indem einzelne Zellen aus Separator- und Elektrodenfolien in Wickel- und Stacking-Maschinen gefertigt werden. Gerade bei der Herstellung von Batteriezellen, aber auch generell bei dünnen oder elastischen Warenbahnen, stellt die auf die Warenbahn wirkende Bahnzugkraft eine wichtige Prozessgröße dar. Die Bahnzugkraft wirkt während der Bearbeitung auf einzelne Stränge, bei Batterien beispielsweise Folien-Stränge, und sollte möglichst auf konstantem Niveau gehalten werden. Dies reduziert Dehnungsstörungen.

Durch verschiedene Mechanismen, wie geometrische Ungenauigkeiten der mitlaufenden und angetriebenen Rollen, Verformungen der einzelnen Maschinenelemente, Haft- und Gleitreibung in den Lagern der einzelnen Rollen sowie durch externe Einflüsse, wirken Störungen auf die Warenbahn ein, die zu Ungenauigkeiten in der Bahnzugkraft führen. Aus diesem Grund kommen in der industriellen Praxis verschiedene Steuerungs- und Regelungskonzepte zum Einsatz, die den Bahnzug auf einem möglichst konstanten Niveau halten sollen.

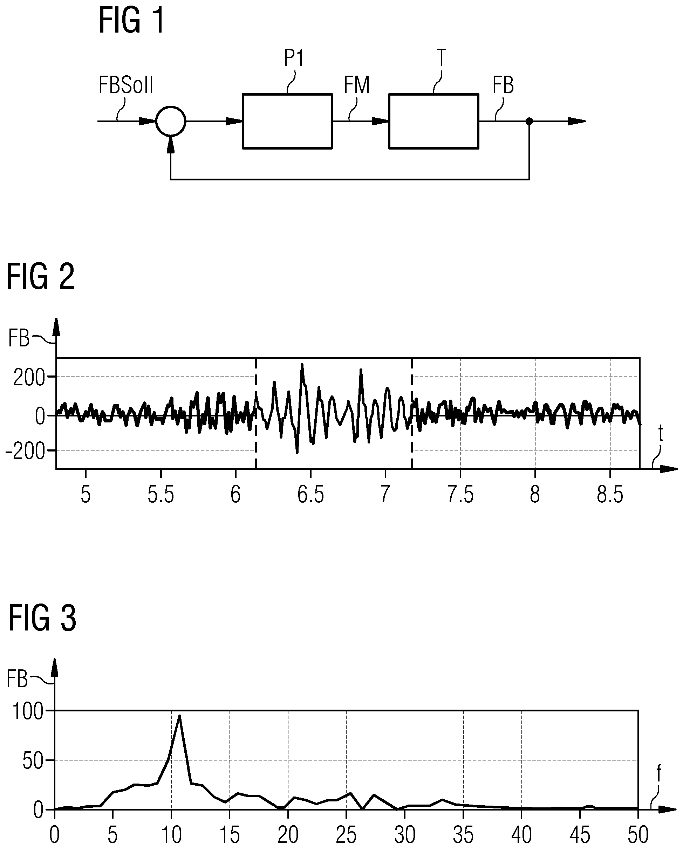

Es sind aus dem Stand der Technik Bahnzuqreqelunqen mit Tänzer bekannt, wobei eine PI-Ausgangsrückführung der gemessenen Bahnzugkraft zur Berechnung der von einem elektrischen Aktuator generierbaren Stellkraft zum Einsatz kommt. In Figur 1 ist ein solches Regelungskonzept gezeigt.

Bei Verwendung eines Tänzers vor allem bei dünnen Materialien, z.B. bei Folien beim Batteriewickeln oder -stapeln, kann die Bahn nicht als starr angenommen werden, sondern ist elastisch verformbar. Da sich der Tänzer frei bewegen kann, können Systeme mit Tänzer daher eine Eigenschwingung oder Eigenmode ausführen, die üblicherweise durch eine vergleichsweise niedrige Eigenfrequenz gekennzeichnet ist. Bei experimentellen Modalanalysen an Beispielmaschinen wurden Resonanzfrequenzen zwischen teilweise 11 und 16 Hz und teilweise um die 33 Hz gemessen.

Störungen in diesem Frequenzspektrum, die zu Anregung dieser Mode führen, werden durch die freie Schwingung dabei drastisch verstärkt. Zur Veranschaulichung sind in den Figuren 2 und 3 die Abweichungen der Zugspannung vom Sollwert über der Zeit bzw. über der Frequenz bei experimentellen Aufbauten aufgetragen. Im durch strichlinierte Abgrenzungen markierten Bereich regen Störungen die schwach gedämpfte Eigenmode Bahn/Tänzer an und es kommt zu erheblichen Zugkraftschwankungen.

Die Verwendung eines aktiven Tänzers mit Bahnzugregelung kann sich dabei kontraproduktiv auswirken: Einerseits ist bei einer Zugkraftregelung eine hohe Reglerverstärkung anzustreben, da diese das Frequenzspektrum der erreichbaren Störunterdrückung erhöht. Andererseits führt eine hohe Reglerverstärkung zu einer zusätzlich Entdämpfung der Eigenmode Bahn/Tänzer, wodurch Zugkraftschwankungen bei Anregungen in diesem Frequenzspektrum zunehmen.

Ferner ist es bekannt, eine direkte Zugregelung mittels Geschwindigskeitsadaption für aktiv angetriebene Rollen in einer Wickelmaschine vorzusehen. Die Beeinflussung der Bahnzugkraft erfolgt dabei indirekt durch Erzeugung einer Differenzgeschwindigkeit in den unterschiedlichen Bahnabschnitten. Dafür müssen alle aktiv angetriebenen Rollen, beispielsweise Wickler und Infeeds, geeignet angesteuert werden.

Vor diesem Hintergrund ist es eine Aufgabe der vorliegenden Erfindung, eine verbesserte Tänzer-basierten Bahnzugregelung zu ermöglichen. Diese Aufgabe wird durch den Gegenstand der unabhängigen Ansprüche gelöst. Vorteilhafte Ausgestaltungen sind in den Ausführungsbeispielen angegeben.

Die Erfindung betrifft ein Verfahren zur Tänzer-basierten Bahnzugregelung, wobei ein aktives Tänzersystem durch Einleiten einer Kraft eines Motors eine auf eine Warenbahn wirkende Bahnzugkraft beeinflusst, wobei eine Bewegungsgeschwindigkeit des Tänzersystems in einer unterlagerten Geschwindigkeitsregelung geregelt wird, wobei die Bahnzugkraft in einer der unterlagerten Geschwindigkeitsregelung überlagerten Zugkraftregelung geregelt wird.

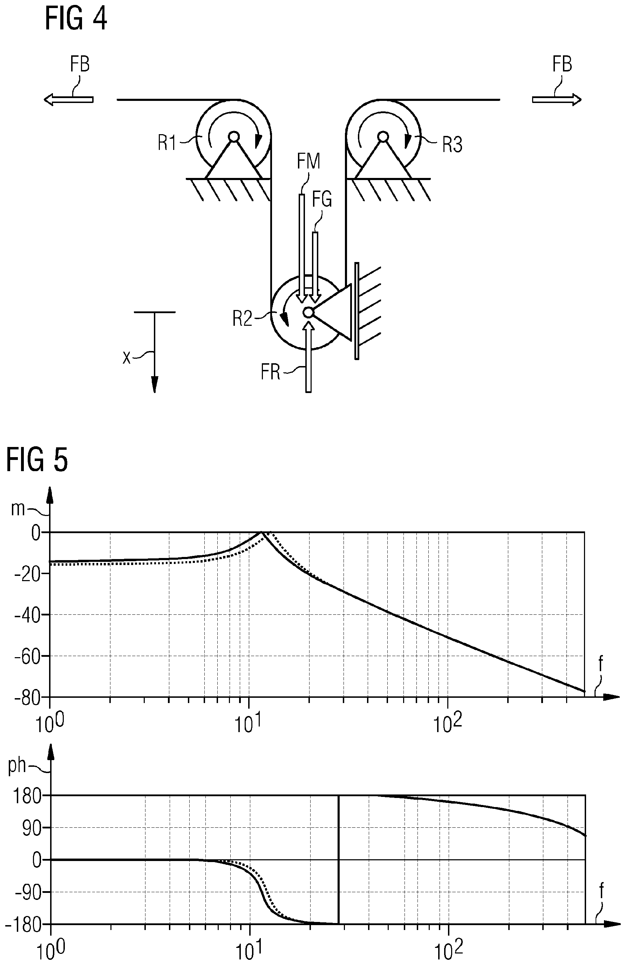

Besonders wenn in Maschinen zur Bearbeitung von Warenbahnen große kinematische Störungen zu erwarten sind, kommen in der industriellen Praxis sogenannte Tänzer zum Einsatz. Zur Veranschaulichung ist in Figur 4 ein aus dem Stand der Technik bekanntes Tänzersystem abgebildet. Ein Bestandteil eines Tänzersystems ist typischerweise ein Tänzer, der beispielsweise durch eine beweglich mitgeführte Rolle gebildet wird, wobei die Bewegungsrichtung im Winkelbereich von ]0°, 180°[ zur Richtung der Warenbahn ausgebildet sein kann, in anderen Worten in eine Richtung, die nicht der der Warenbahn-Richtung entspricht.

Typischer Bestandteil ist eine von der Bahn mitgeführte und von dieser teilweise, beispielsweise mit 180°, umschlungene Rolle, deren Achse oftmals vertikal, senkrecht zur Warenbahn-richtung, translatorisch frei beweglich ist. Die Rollen R1 bis R3 sind beispielsweise frei drehbar, die Tänzerrolle R2 ist zusätzlich vertikal beweglich: die Lage von R2 ist durch die Koordinate x beschrieben. Eine Krafteinleitung in Bewegungsrichtung des Tänzers führt zu einer Veränderung der Bahnzugkraft FB. Werden Trägheiten der Rollen sowie die Bahnnachgiebigkeit des Aufbaus in Figur 4 vernachlässigt, lautet die Kräftebilanz FB = 1/2 ^{∗}(Fm + FG-FR- m^{∗}a), wobei FR die durch Haft- und Gleitreibung entstehende Reibkraft, m^{∗}a die Trägheitskraft und FG die Gewichtskraft beschreibt.

Es existieren passive Tänzereinheiten, die allein über ihre Gewichts- und Trägheitskraft wirken, und aktive Tänzereinheiten, welche beispielsweise mit einem pneumatischen, elektrischen oder hydraulischen Aktor ausgestattet sind und welche die Kraft Fm in die Bahn einleiten. Aktive Tänzereinheiten, können rein gesteuert, d.h. ohne Rückführung der gemessenen Bahnzugkraft, oder im Rahmen einer Bahnzugkraftregelung verwendet werden.

Neben dem anhand von Figur 4 beschriebenen Aufbau sind auch Tänzersysteme bekannt, bei welchen sich eine frei bewegliche Tänzer-Achse auf einer Kreisbahn bewegt. Beispielsweise wird ein solcher aktiver Tänzer von einem Rotationsmotor angetrieben. In der vorliegenden Anmeldung sind unter einem Tänzersystem auch zu dem in Figur 4 gezeigten Tänzersystem artverwandte Tänzer-Systeme zu verstehen. Ein Tänzersystem kann demnach beispielsweise auch durch andere kinematische Anordnungen der Rollen, andere Umschlingungswinkel der Tänzerrolle, mehrere Tänzerrollen etc. gebildet werden.

Dabei besteht ein streng monotoner Zusammenhang zwischen der aktiv beeinflussbaren Kraft Fm und der Bahnzugkraft FB.

Der Vorteil eines passiven Tänzers und eines aktiven Tänzers ohne Zugkraftregelung liegt in seiner lokalen Puffer-Wirkung: Basierend auf der oben beschriebenen Kräftebilanz wird deutlich, dass sich die Bahnzugkraft in einer stationären Betrachtung unmittelbar aus der Summe Fm+FG-FR ergibt. Dies gilt auch bei Einwirken kinematischer Störungen, die beispielsweise durch Unrundheit der Rollen verursacht werden. Konkret bedeutet dies, dass zumindest quasi-statisch die Bahnzugkraft abgesehen von der i.A. unbekannten Reibkraft FR durch die Gewichtskraft FG und die ggf. aktiv beeinflussbare Kraft Fm festgelegt ist und nicht von Störungen abhängt. Die Gültigkeit dieser quasi-statischen Näherung richtet sich nach dem Tänzergewicht: Je geringer das Tänzergewicht m, desto kürzer ist die Übergangsbewegung und desto dynamischer die Störunterdrückung.

Der wesentliche Nachteil eines passiven Tänzers und eines aktiven Tänzers ohne Zugkraftregelung liegt in der verbleibenden Ungenauigkeit durch die Reibkraft FR. Wird ein aktiver Tänzer verwendet sowie eine Ermittlung der Bahnzugkraft durchgeführt, lässt sich dieses Problem durch eine Bahnzugregelung vermeiden.

Das Verfahren ist insbesondere für elektrisch aktuierte aktive Tänzersysteme vorteilhaft anwendbar. Beispielsweise führt die Einleitung einer von einem Rotations- oder Linearmotor erzeugten Kraft zu einer unmittelbaren Beeinflussung der Bahnzugkraft.

Es wird die Bahnzugkraft, die auf eine Warenbahn wirkt, ermittelt, um diese in der Zugkraftregelung verwenden zu können. Beispielsweise ist entsprechende Sensorik vorgesehen, welche eine Messung der Zugkraft in der Warenbahn erlaubt.

Zusätzlich wird eine Regelung der Bewegungsgeschwindigkeit des Tänzersystems, man könnte auch von der Tänzergeschwindigkeit sprechen, in einer unterlagerten Geschwindigkeitsregelung vorgenommen. Bei der Bewegungsgeschwindigkeit handelt es sich um die Geschwindigkeit, mit der das Tänzersystem oder Teile des Tänzersystems, insbesondere ein oder mehrere Tänzerrollen oder Tänzerelemente, eine translatorische Bewegung erfahren.

Zur Tänzergeschwindigkeitsregelung lassen sich bekannte Verfahren, beispielsweise integriert in eine Antriebsregelung, nutzen.

Die Regelung der Bahnzugkraft erfolgt der Bewegungsgeschwindigkeitsregelung übergeordnet.

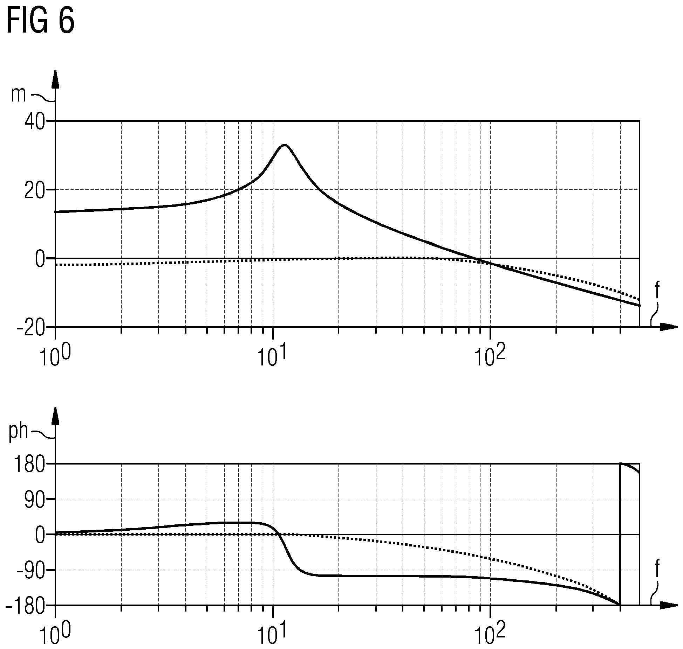

Die Vorteile des vorgeschlagenen Verfahrens werden anhand von Figur 5 und Figur 6 deutlich. Es ist jeweils der Frequenzgang der jeweiligen Regelstrecke (durchgezogene Linie entspricht dem offenen Regelkreis, strichlinierte Linie entspricht dem geschlossenen Regelkreis) für ein Beispielsystem dargestellt, wobei Figur 5 eine herkömmliche Bahnzug-Regelstruktur wie in Figur 1 skizziert zugrunde liegt und Figur 6 die vorgeschlagene innere Drehzahl-Regelungsstruktur.

Anhand des Frequenzgangs der Regelstrecke in Figur 5 wird deutlich, dass bedingt durch die Resonanzüberhöhung der Mode Tänzer/Bahn ein Kompromiss zwischen erreichbarer Störunterdrückung, d.h. einer hohen Reglerverstärkung, und Dämpfung im geschlossenen Regelkreis - am offenen Regelkreis entspricht dies einer hohen Phasenreserve, d.h. einer kleinen Kreisverstärkung - gefunden werden muss. Das obere Diagramm in Figur 5 trägt den Frequenzgang als Magnitude m in Dezibel über der Frequenz f auf, im unteren Diagramm ist die Phase ph über der Frequenz f im gleichen Frequenzbereich aufgetragen.

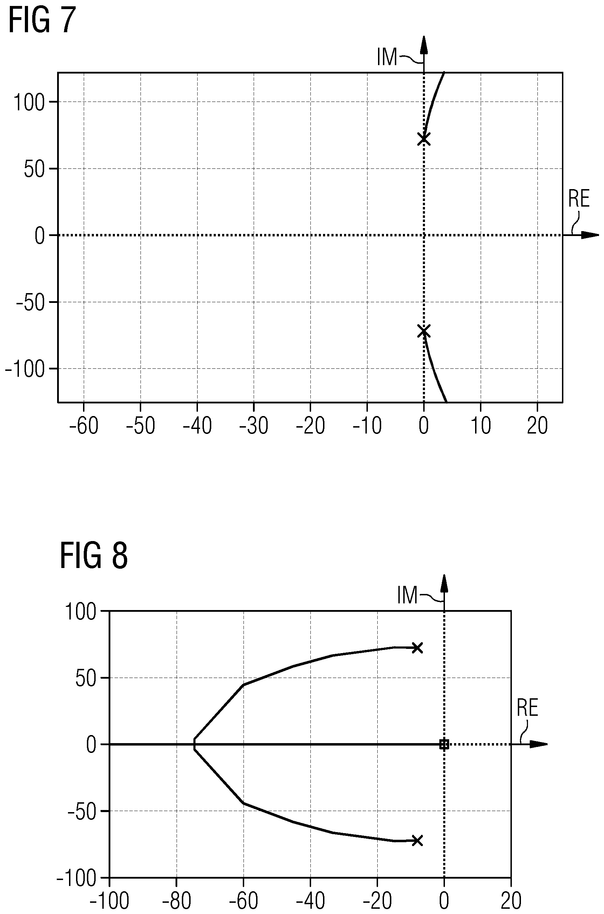

Der Zusammenhang zwischen Störunterdrückung und Dämpfung wird auch an der in Figur 7 dargestellten Wurzelortskurve des um beispielsweise einen P-Regler geschlossenen Regelkreises, dem eine herkömmliche Bahnzug-Regelstruktur wie in Figur 1 skizziert zugrunde liegt, verständlich: Die Wurzelortskurve beschreibt die Pole des geschlossenen Regelkreises bei Variation der Kreisverstärkung. Es ist auf der Abszisse der imaginäre Teil IM in 1/Sekunde der Wurzelortskurve dargestellt, auf der Ordinate der reelle Teil RE in 1/Sekunde. Bei Zunahme der Kreisverstärkung nimmt der Winkel zwischen negativer reeller Achse und den Polen, d.h. die Dämpfung der Pole, zu. Eine Erhöhung der Kreisverstärkung führt somit zu einer schlechteren Dämpfung des konjungiert komplexen Polpaares.

In regelungstechnischer Hinsicht ist dieses Verhalten unzufriedenstellend, da zum einen keinerlei Dämpfung der kritischen Eigenmode erfolgt und zum anderen aufgrund der geringen Kreisverstärkung eine nur geringe Störkompensation zu erwarten ist. Darüber hinaus besitzt die Regelung nur sehr schlechte Robustheitseigenschaften, da die Stabilität des geschlossenen Regelkreises maßgeblich von der Lage und Ausprägung der Resonanzüberhöhung der Mode Tänzer/Bahn abhängt. Materialeigenschaften, insbesondere Querschnitt, Steifigkeit und Dämpfung des Bahnmaterials spielen also eine wesentliche Rolle, und eine Änderung des Bahnmaterials beeinflusst unmittelbar das Regelungsverhalten. Bei der Auslegung der Regelung ist daher immer vom kritischsten Fall auszugehen, wodurch grundsätzlich mit Einbußen in anderen Szenarien zu rechnen ist.

Die Figur 6 zeigt als Vergleich dazu den Frequenzgang für die vorgeschlagene Kaskaden-Regelungsstruktur. Es ist wiederum die Auswirkung der Eigenmode Tänzer/Bahn auf den Frequenzgang deutlich erkennbar. Es sind die gleichen Größen wie in Figur 5 gegeneinander aufgetragen.

Im Gegensatz zum oben beschriebenen Ansatz wird die erreichbare Kreisverstärkung allerdings nicht durch die Resonanzüberhöhung, sondern vielmehr durch höherfrequente Mechanismen, beispielsweise durch die Dynamik des geschlossenen Stromregelkreises sowie durch in diesem Beispiel nicht berücksichtigte Nachgiebigkeiten im Antriebsstrang des Aktors begrenzt. Im Vergleich zum Regelkreis nach Stand der Technik in Figur 1 lässt sich üblicherweise eine deutlich höhere Bandbreite erreichen. Ein wesentlicher Vorteil dieses Verfahrens liegt darin, dass durch eine Erhöhung der Kreisverstärkung eine bessere Dämpfung des kritischen konjungiert komplexen Polpaares erfolgt. Dieser Zusammenhang wird durch die in Figur 8 gezeigten Wurzelortskurve deutlich: Eine Erhöhung der Kreisverstärkung führt zu einer Abnahme des Winkels zwischen schwingungsfähigem Polpaar und negativer reeller Achse.

In Figur 6 im Vergleich zu Figur 5 wird ein wesentlicher Vorteil des vorgeschlagenen Regelgungskonzepts deutlich: Da das kritische Polpaar des Einmassenschwingers bereits durch die unterlagerte Drehzahlregelung gedämpft wurde, besitzt die Regelstrecke beim vorgeschlagenen Konzept keine Resonanzüberhöhung und keinen zugehörigen Phasenabfall. Es lässt sich leicht nachweisen, dass beispielsweise die mit einer P-Regelung erreichbare Bandbreite nur von der Dynamik des geschlossenen Drehzahlregelkreises sowie von in diesem Beispiel nicht berücksichtigten und i.d.R. hochfrequenten Nachgiebigkeiten der beteiligten Maschinenelemente abhängt (z.B. Elastizität der Rolle zur Bahnzugmessung).

Der Vergleich zwischen den Führungsfrequenzgängen in den Figuren 5 und 6 (jeweils strichlinierte Kurve) zeigt, dass durch das vorgeschlagenen Regelungskonzept eine deutlich höhere Bandbreite und damit eine bessere Störunterdrückung erzielbar ist. Zudem wird die schwingungsfähige Eigenmode Tänzer/Bahn durch die Regelung gedämpft.

Auf vorteilhafte Weise ergibt sich somit eine höhere Führungsbandbreite und damit bessere Störunterdrückung. Ferner werden schwingungsfähige Eigenmoden eines Einmassenschwingers, als der das System aus Tänzer und Bahn angesehen werden kann, besser gedämpft. Es ergeben sich zudem deutlich bessere Robustheitseigenschaften der Regelung, da die Steifigkeit und Dämpfung des Bahnmaterials keine Auswirkung auf die Parametrierung der Regelung besitzen.

Eine Inbetriebnahme der Regelungsstruktur lässt sich leicht anhand von Frequenzgangmessungen umsetzen.

Gleichzeitig stellt die vorgeschlagene Lösung vorteilhaft sicher, dass dank der eingesetzten Tänzerregelung gleichmäßig über die Warenbahn verteilt eine hohe Zuggenauigkeit erzielt wird, wobei nur das Tänzersystem geeignet angesteuert werden muss. Somit kann vorteilhaft sichergestellt werden, dass auch bei Aufbauten mit aktiv angetriebenen Rollen, in welchen eine ausreichend hohe Dynamik der angetriebenen Rollen nicht sichergestellt ist, eine hohe Genauigkeit bei der Bahnzugreglung erreicht wird. Gerade Wickler-Achsen sind beispielsweise aufgrund hoher Last-Trägheiten für dynamische Regelungsvorgänge oftmals ungeeignet.

Beim vorgeschlagenen Ansatz wird vorteilhafterweise die Geschwindigkeit des Tänzers kommandiert, was zu einer unmittelbaren Beeinflussung der Bahnkraft führt. Die Bahngeschwindigkeit bleibt hiervon nahezu unbeeinflusst und die Regulierung des Bahnzugs lässt sich in einem abgetrennten Bahnabschnitt umsetzen. Diese lokale Wirkung ist vorteilhaft, da die Dynamik des oben vorgeschlagenen Bahnzugregelkreises für die Regelgüte verantwortlich ist und damit insbesondere auch nur der Antriebsstrang der Tänzerachse oder ggf. mehrerer Achsen des Tänzersystems hochdynamisch betrieben werden müssen.

Sowohl für die innere als auch die äußere Kaskade ist eine möglichst schnelle Neu-Berechnung des Stellgesetzes und Aktualisierung der jeweiligen Stellsignale Soll-Kraft und Soll-Geschwindigkeit vorteilhaft. Die Stellsignale der beiden Kaskaden werden beispielsweise auf einem Mikroprozessor berechnet und zeitlich mit einem festen Rechentakt ausgegeben. Ein möglichst kleiner Wert für diesen Rechentakt, zum Beispiel kleiner gleich 250 µs oder 125 ps, ist besonders vorteilhaft.

Gemäß einer Ausgestaltung wird die Bahnzugkraft durch Kommandieren einer Soll-Bewegungsgeschwindigkeit des Tänzersystems geregelt. Das Regelungskonzept sieht somit eine zusätzliche Regelschleife vor, die die Bewegungsgeschwindigkeit des Tänzers betrifft. Die Bahnzugkraft wird somit indirekt über die Regelung der Bewegungsgeschwindigkeit des Tänzersystems geregelt. Die Bahnzugregelung gibt dabei mittels eines Bahnzugreglers die Soll-Bewegungsgeschwindigkeit für die Bewegungsgeschwindigkeitsregelung vor.

Gemäß einer Ausgestaltung wird die Soll-Bewegungsgeschwindigkeit einem Geschwindigkeitsregler der unterlagerten Geschwindigkeitsregelung zugeführt. Dieser setzt dann die Bewegung des Tänzers bzw. die Ansteuerung eines Motors, der den Tänzer zur Bewegung veranlasst, derart um, dass eine Kraft in die Warenbahn eingeleitet wird.

Gemäß einer Ausgestaltung wird zur Regelung der Bewegungsgeschwindigkeit eine Ist-Bewegungsgeschwindigkeit des Tänzersystems in der unterlagerten Geschwindigkeitsregelung zurückgeführt. Die innere Kaskade der Regelungsstruktur ist somit zum Anpassen der Ist-Bewegungsgeschwindigkeit an die Soll-Geschwindigkeit zuständig. Dies kann vorteilhafterweise besonders dynamisch erfolgen auf Basis der Ist-Bewegungsgeschwindigkeit, ohne, dass auch die äußere Kaskade schon Wirkung auf Basis der Ist-Bahnzugkraft zeigen müsste. Vorteilhaft wäre die Ausführung dieser Geschwindigkeitsregelung mit einem schnellen Rechentakt des digitalen Regelungs- und Antriebssystems.

Gemäß einer Ausgestaltung wird zur Regelung der Bahnzugkraft eine Ist-Bahnzugkraft in der überlagerten Zugkraftregelung zurückgeführt. Es werden somit vorteilhaft zwei Größen in der gesamten Regelstruktur zurückgeführt und es kann somit mit unterschiedlichen Mechanismen auf den Verlauf der beiden Größen Tänzer-Bewegungsgeschwindigkeit und Bahnzugkraft durch die jeweiligen Regelkreise reagiert werden.

Gemäß einer Ausgestaltung wird der überlagerten Zugkraftregelung eine Soll-Bahnzugkraft zugeführt. Diese wird für eine Warenbahn-verarbeitende Maschine, beispielsweise eine Wickelmaschine, je nach Material und je nach Anlage oder gewählter Wickeltechnik eingestellt. Sie kann insbesondere variabel im Wickel- oder Stapel-Prozess verändert werden.

Gemäß einer weiteren Ausgestaltung wird die Ist-Bewegungsgeschwindigkeit mittels eines Messsystems oder Gebersystems ermittelt. Einsetzbar sind beispielsweise interne oder externe Sensoren, die die Geschwindigkeit des Tänzersystems ermitteln. Beispielsweise wird eine Drehzahl eines Tänzer-Antriebsmotors mittels eines Gebers bestimmt und direkt für die Ermittlung der Bewegungsgeschwindigkeit verwendet. Gemäß einer weiteren Ausgestaltung wird die Ist-Bahnzugkraft mittels eines Sensors, insbesondere mittels einer Zugmessdose, ermittelt. Beispielsweise wird eine Kraftmessdose eingesetzt. Zur Ermittlung werden insbesondere Umlenkrollen oder ähnliches eingesetzt, um eine geeignete Messung zu ermöglichen.

Gemäß einer weiteren Ausgestaltung wird die Bewegungsgeschwindigkeit mittels eines Rotations- oder Linearmotors bewirkt. Je nach Prinzip des eingesetzten Tänzersystems bieten sich Linear- oder Rotationsmotoren an, um beispielsweise eine Achse einer Tänzerrolle zu bewegen. Beispielsweise erfolgt die Bewegung entlang einer mechanisch vorgegebenen Bahn. Beispielsweise erfolgt eine Auslenkung auf einer geraden Bahn oder eine Bewegung auf einer Kreisbahn.

Gemäß einer Ausgestaltung wird eine Lage des Tänzers des Tänzersystems mittels einer Tänzerlageregelung geregelt, die eine zu einer für die Warenbahn vorgesehenen Rolle, insbesondere einem Wickler oder einer Infeed-Rolle, zugehörige Drehzahl oder ein zugehöriges Drehmoment kommandiert. Wird die Tänzereinheit ausschließlich mit einer Bahnzugregelung betrieben, lässt sich die sich einstellende Lage des Tänzers nicht weiter kontrollieren. Da sich der Tänzer aus mechanischer Sicht jedoch nur in einem beschränkten Auslenkungsbereich oder Verfahrbereich bewegen sollte, ist eine zusätzliche Regelschleife vorteilhaft, welche die Tänzerlage zumindest im zeitlichen Mittel auf einem konstanten Niveau reguliert. Diese Regelung besitzt in vorteilhaften Ausgestaltungen eine im Vergleich zur Bahnzugregelung niedrige Dynamik.

In einer Variante berechnet die Regelung die Soll-Tänzermotorkraft basierend auf folgenden Eingängen:
- Zugkraftsollwert FBSoll, insbesondere für eine virtuelle Messstelle,
- Gemessene Bahngeschwindigkeit vor dem Tänzersystem,
- Gemessene Bahngeschwindigkeit nach dem Tänzersystem,
- Gemessene Bahnbeschleunigung vor dem Tänzersystem,
- Gemessene Bahnbeschleunigung nach dem Tänzersystem,
- Soll-Bahnbeschleunigung,
- Soll-Bahngeschwindigkeit,
- Gemessene Tänzergeschwindigkeit, und/oder
- Gemessene Zugkraft.

Die Eingänge setzen sich hierbei aus exogenen, d.h. von der Soll-Tänzermotorkraft unbeeinflussbaren, Signalen, insbesondere Soll-Größen, und endogenen, d.h. von der Soll-Tänzermotorkraft direkt oder indirekt beeinflussbaren, Signalen, insbesondere Messsignalen, zusammen.

Bis auf den Zugkraftsollwert sind alle Eingänge der Regelung als optional zu betrachten. Zur vollumfänglichen Ausnutzung der Variante sind alle Eingänge geeignet zu verknüpfen. Ebenso kann das Regelungskonzept aber auch mit nur einem Teil der angegebenen Eingänge betrieben werden. Insbesondere die Pfade von den Bahngeschwindigkeiten und -beschleunigungen zum Kraftstellsignal lassen sich in vorteilhaften Ausgestaltungen wahlweise ab- oder zuschalten. Beschleunigungs- und Geschwindigkeitsgrößen sind voneinander abhängige Signale. Wahlweise können diese separat gemessen oder ermittelt werden oder durch Differentiation bzw. Integration aus dem jeweiligen anderen Wert bestimmt werden.

Die Erfindung betrifft ferner ein Kaskadenregelungssystem für eine Tänzer-basierte Bahnzugregelung, umfassend eine unterlagerte Geschwindigkeitsregelung zur Regelung einer Bewegungsgeschwindigkeit eines aktiven Tänzersystems, sowie eine der unterlagerten Geschwindigkeitsregelung überlagerte Zugkraftregelung zur Regelung einer Bahnzugkraft.

Gemäß einer Ausgestaltung weist die unterlagerte Geschwindigkeitsregelung einen Geschwindigkeitsregler, insbesondere einen P-Regler, PI-Regler oder einen PID-Regler, auf. Als Geschwindigkeitsregler sind beliebige Stellgesetze denkbar, die je nach Applikation geeignet gewählt werden.

Gemäß einer Ausgestaltung weist die überlagerte Zugkraftregelung einen Zugkraftregler, insbesondere einen P-Regler, PI-Regler oder einen PID-Regler auf. Als Zugkraftregler sind beliebige Stellgesetze denkbar, die je nach Applikation geeignet gewählt werden.

Gemäß einer Ausgestaltung ist ferner ein Tänzerlageregelungssystem vorgesehen. Das Tänzerlageregelungssystem kann vorteilhaft zusätzlich zu der Bahnzugregelung vorgesehen sein und umfasst einen Lageregler, beispielsweise einen P-, PI-, PID-Regler etc., der die Position des Tänzersystems oder Tänzers als Sollwert erhält und mit einem Istwert der Position vergleicht und eine Drehzahl oder ein Drehmoment einer die Warenbahn zuführenden Einheit ausgibt.

Gemäß einer Ausgestaltung ist das Tänzersystem als elektrisch, pneumatisch und/oder hydraulisch aktuiertes Tänzersystem ausgebildet.

Gemäß einer Ausgestaltung weist das Tänzersystem als Aktuator einen Rotations- oder Linearmotor auf. Bei Einsatz eines rotatorischen Motors wird als Geschwindigkeit beispielsweise direkt die Motordrehzahl verwendet. Eine Soll-Motordrehzahl wird dem Geschwindigkeitsregler vorgegeben. Mittels eines Drehzahlgebers kann die Ist-Geschwindigkeit direkt aus der Motordrehzahl bestimmt werden. Alternativ kann die Ist-Geschwindigkeit aus der Drehzahl eines rotatorischen Teils des Tänzer-Antriebsstrangs ermittelt werden.

Ferner kann ein Getriebe am Motorausgang zum Einsatz kommen und entsprechend die Getriebe-Ausgangs-Geschwindigkeit gemessen werden. Alternativ kann die translatorische Geschwindigkeit des Tänzers über eine geeignet Messvorrichtung erfasst werden. Dabei können die genannten Varianten auch teilweise oder alle zusammen eingesetzt werden.

Beim Einsatz eines Linearmotors oder translatorischen Motors kann direkt die Geschwindigkeit des Linearmotors verwendet werden.

Die Erfindung wird anhand von Ausführungsbeispielen mit Hilfe der Figuren näher erläutert. Es zeigen:
- Figur 1: eine schematische Darstellung eines Regelungskonzepts zur Bahnzugregelung nach Stand der Technik;
- Figur 2: ein Diagramm zur Darstellung der Abweichung der Zugspannung vom Sollwert aufgetragen über der Zeit bei Regelungsverfahren nach dem Stand der Technik;
- Figur 3: ein Diagramm zur Darstellung der Abweichung der Zugspannung vom Sollwert aufgetragen über der Frequenz bei Regelungsverfahren nach dem Stand der Technik;
- Figur 4: eine schematische Darstellung einer Tänzereinheit in einer vereinfachten Anordnung zur Bearbeitung einer Warenbahn;
- Figur 5: ein Diagramm eines Frequenzgangs bei einem Bahnzugregelkreis nach Stand der Technik;
- Figur 6: ein Diagramm eines Frequenzgangs bei einer Bahnzugregelung mit Drehzahlregelkreis gemäß einem Ausführungsbeispiel der Erfindung;
- Figur 7: ein Diagramm einer Wurzelortskurve bei einem Regelungskonzept nach Stand der Technik;
- Figur 8: ein Diagramm einer Wurzelortskurve bei einem Regelungskonzept gemäß einem Ausführungsbeispiel der Erfindung;
- Figur 9: eine schematische Darstellung einer Wickelmaschine zur Wicklung von Batteriezellen;
- Figur 10: eine schematische Darstellung eines Regelungskonzepts zur Bahnzugregelung gemäß einem Ausführungsbeispiel der Erfindung;
- Figur 11: eine schematische Darstellung eines Regelungskonzepts zur Bahnzugregelung gemäß einem weiteren Ausführungsbeispiel der Erfindung.

In den Figuren sind funktionsgleiche Elemente mit denselben Bezugszeichen versehen, sofern nichts anderes angegeben ist.

In Anwendungen von warenbahnverarbeitenden Maschinen wird zur Regelung der Bahnzugkraft konventionell ein Konzept eingesetzt, wie es in Figur 1 veranschaulicht ist: Es wird die Bahnzugkraft FB, die an der Warenbahn wirkt, gemessen. Es gibt einen vorgegebenen Sollwert für die Bahnzugkraft, FBSoll, der der Regelung zugeführt wird. Je nach Abweichung von Soll-Bahnzugkraft FBSoll und gemessener Bahnzugkraft FB regelt ein eingesetzter Regler Pl, beispielsweise ein P-Regler oder ein PI-Regler, eine Kraft FM, die in die Bahn eingeleitet wird. Dafür ist ein aktives Tänzersystem T vorgesehen.

Bei einem solchen Regelungsverfahren nach dem Stand der Technik ergibt sich für eine beispielhafte Wickelmaschine mit einem Aufwickler das in Figur 2 abgebildete Diagramm, das die Abweichung der Zugspannung von ihrem Sollwert während eines Zeitausschnitts mit konstanter Bahngeschwindigkeit zeigt. Die Abszisse zeigt die Zeit t in Sekunden, die Ordinate die Kraft (Bahnzugkraft) FB in Newton. Im Abschnitt zwischen 6,2s und 7,2 s liegt die Umdrehungsfrequenz des Aufwicklers bei etwa 5,5 Hz. Die dazugehörige erste Oberschwingung bei 11 Hz führt zu einer Anregung der Eigenmode des Systems aus Bahn und Tänzer bei 11 Hz. In der entsprechenden Fourierdarstellung, wie sie in Figur 3 abgebildet ist, bei der die Zugkraft FB in Newton über der Frequenz in Hertz aufgetragen ist, erkennt man eine entsprechend hohe Schwankung in der Zugkraft FB im Bereich rund um 11 Hz. Diese Schwankung wirkt sich nachteilig auf die Qualität der Warenverarbeitung aus, da Unregelmäßigkeiten in der Bahnspannung unerwünscht sind, beispielsweise weil es so zu Unregelmäßigkeiten bei einem Druckergebnis oder einem Wickelergebnis oder in einem extremen Fall zu einem Bahnabriss kommen kann.

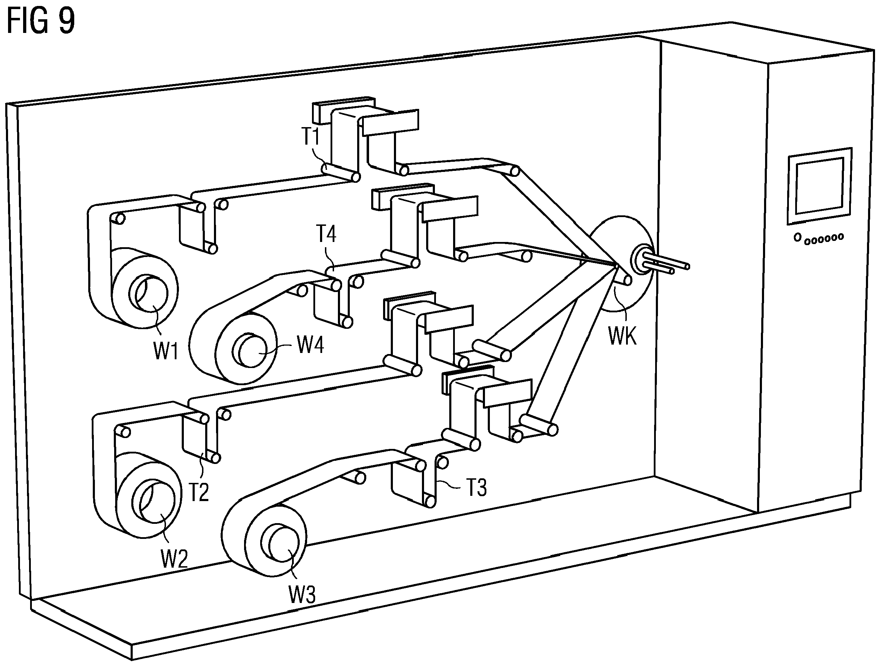

In Figur 9 ist der Aufbau einer Wickelmaschine für den Einsatz beim Batteriewickeln abgebildet. Es wird jeweils eine Elektrodenfolien von den Wicklern W1 und W2 abgewickelt. Von den Wicklern W3 und W4 wird jeweils eine Separatorfolie abgewickelt. Die Schichten werden auf einen gemeinsamen Wickelkörper WK aufgewickelt, so dass eine Separatorfolie jeweils zwischen zwei Elektrodenfolien zum Liegen kommt. Alle Folien weisen jeweils eine Tänzereinheit auf. Vorteilerweise werden alle Warenbahnen in Hinblick auf ihre Bahnspannung mit dem vorliegend beschriebenen kaskadierten Regelungskonzept betrieben. Gerade bei Batteriewickelanwendungen können der Ausschuss in der Produktion reduziert und somit Kosten eingespart werden.

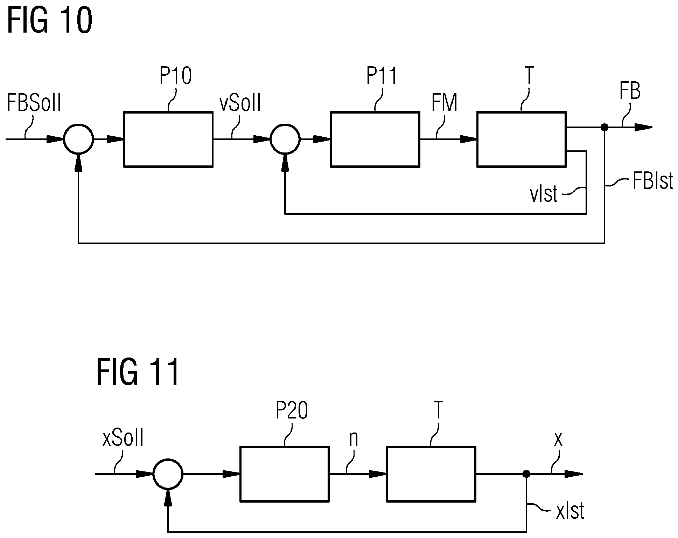

In Figur 10 ist ein Ausführungsbeispiel für ein Regelungskonzept gezeigt, mit dem das Konzept der vorliegend vorgestellten unterlagerten Geschwindigkeitsregelung mit der unterlagerten Geschwindigkeitsregelung überlagerter Zugkraftregelung realisiert werden kann. Die überlagerte Zugkraftregelung ist gemäß dem Ausführungsbeispiel als äußerer Regelkreis umgesetzt. Diesem äußeren Regelkreis wird die eine Soll-Bahnzugkraft FBSoll vorgegeben. Diese Sollbahnzugkraft wird als besonders geeignet an der Bahn wirkende Kraft aus Messungen an der konkreten Wickelmaschine im Testbetrieb oder aus der Literatur gewonnen. Es ist ein Zugkraftregler P10 vorgesehen, der rein beispielhalber ein PI-Regler sein kann. Der Regler P10 übersetzt die Vorgabe der Sollbahnzugkraft BFSoll in eine Bewegungsgeschwindigkeit v des Tänzersystems T.

Die Geschwindigkeit, mit der sich der Tänzer T, beispielsweise eine sich auf einer kreisförmigen Bahn bewegende Tänzerrolle, translatorisch bewegt, wird mittels des Reglers kommandiert. Sie wird als Soll-Bewegungsgeschwindigkeit der unterlagerten Regelungsstruktur zugeführt. Diese ist als innerer Regelkreis ausgeführt und weist wiederum einen Geschwindigkeitsregler Pll auf, der beispielsweise ebenfalls als PI-Regler ausgeführt ist. Der Geschwindigkeitsregler Pll gibt die Kraft FM aus, die schließlich über den Tänzer T in die Warenbahn eingeleitet wird. Als Istwerte werden einerseits die Ist-Bewegungsgeschwindigkeit für den inneren Regelkreis mit dem Geschwindigkeitsregler Pll und andererseits die Ist-Bahnzugkraft für den äußeren Regelkreis mit dem Zugkraftregler zurückgeführt.

Weitere Ausführungsbeispiele sind denkbar, die als Varianten oder Erweiterungen von der anhand von Figur 10 dargestellten Kaskadenregelungsstruktur denkbar sind.

Als Erweiterung ist ein weiteres Ausführungsbeispiel denkbar, bei dem neben der Bahnzugregelung des Tänzersystems T eine Tänzerlageregelung vorgesehen ist. Dies wird anhand von Figur 11 veranschaulicht. Ziel ist die Einhaltung der Wegbegrenzung bzgl. der Tänzerlage durch eine entsprechende Tänzerlagereglung. Zusätzlich zur beschriebenen Bahnzugregelung wird das Tänzersystem T mit einer Tänzerlageregelgung betrieben, damit sich die einstellende Lage des Tänzers kontrollieren lässt. So wird der Tänzer T rein mechanisch in einem beschränkten Verfahrbereich gehalten.

Als Stellgröße dient für eine Tänzerlageregelung beispielsweise die Drehzahl n einer vorgelagerten und mit einem drehzahlgeregelten Motor aktuierten Rolle oder direkt die Drehzahl eines Abwicklers am Anfang einer Bahn. Als Regelgröße dient eine Position x des - unabhängig von der Tänzerlageregelung zuggeregelten - Tänzersystems T, welche als messbar angenommen wird und gemäß dem Strukturbild in Figur 11 über einen Regler P20 als Ist-Position xIst auf die kommandierte Drehzahl zurückgeführt wird. Die Lage des Tänzers T wird gemessen und durch die drehzahlgeregelte aktiv angetriebene Rolle, beispielsweise eine Infeed-oder Wickler-Rolle, im Rahmen einer überlagerten Tänzerlageregelung reguliert.

In regelungstechnischer Hinsicht ist die Regelung im Vergleich zur unterlagerten Bahnzugregelung möglichst langsam einzustellen, damit die mit der Variation der Geschwindigkeit der Infeed-Rolle oder des Wicklers verbundene Zugkraftschwankung möglichst gering bleibt. Denn je dynamischer die Tänzerlageregelung agiert, desto dynamischer reagiert die unterlagerte Bahnzugregelung, was schließlich zu einer nicht gewünschten Verkopplung beider Regelkreise fuhren würde.

Durch die in der vorliegenden Anmeldung vorgestellte Vorgehensweise wird eine hochdynamische Unterdrückung von Störungen erreicht. Zwei wesentliche Nachteile bisheriger Systeme, nämlich die mangelnde dämpfende Wirkung und schlechte Robustheitseigenschaften gegenüber auftretenden Änderung im Wickelprozess, Störungen oder Änderungen des Bahnmaterials, können überwunden werden.

## Patentansprüche

1. Verfahren zur Tänzer-basierten Bahnzugregelung, wobei ein aktives Tänzersystem durch Einleiten einer Kraft (FM) eines Motors eine auf eine Warenbahn wirkende Bahnzugkraft (FB) beeinflusst,
wobei eine Bewegungsgeschwindigkeit (v) des Tänzersystems (T, T1, T2, T3, T4) in einer unterlagerten Geschwindigkeitsregelung geregelt wird,
wobei die Bahnzugkraft in einer der unterlagerten Geschwindigkeitsregelung überlagerten Zugkraftregelung geregelt wird.

2. Verfahren nach Anspruch 1, wobei die Bahnzugkraft (FB) durch Kommandieren einer Soll-Bewegungsgeschwindigkeit (vSoll) des Tänzersystems (T, T1, T2, T3, T4) geregelt wird.

3. Verfahren nach Anspruch 2, wobei die Soll-Bewegungsgeschwindigkeit (vSoll) einem Geschwindigkeitsregler der unterlagerten Geschwindigkeitsregelung zugeführt wird.

4. Verfahren nach einem der vorstehenden Ansprüche, wobei zur Regelung der Bewegungsgeschwindigkeit (v) eine Ist-Bewegungsgeschwindigkeit (vIst) des Tänzersystems (T, T1, T2, T3, T4) in der unterlagerten Geschwindigkeitsregelung zurückgeführt wird.

5. Verfahren nach einem der vorstehenden Ansprüche, wobei zur Regelung der Bahnzugkraft (FB) eine Ist-Bahnzugkraft (FBIst) in der überlagerten Zugkraftregelung zurückgeführt wird.

6. Verfahren nach einem der vorstehenden Ansprüche, wobei der überlagerten Zugkraftregelung eine Soll-Bahnzugkraft (FBSoll) zugeführt wird.

7. Verfahren nach Anspruch 4, wobei die Ist-Bewegungsgeschwindigkeit (vIst) mittels eines Messsystems oder Gebersystems ermittelt wird.

8. Verfahren nach Anspruch 5, wobei die Ist-Bahnzugkraft (FBIst) mittels eines Sensors, insbesondere mittels einer Zugmessdose, ermittelt wird.

9. Verfahren nach einem der vorstehenden Ansprüche, wobei die Bewegungsgeschwindigkeit (v) mittels eines Rotations- oder Linearmotors bewirkt wird.

10. Verfahren nach einem der vorstehenden Ansprüche, wobei eine Lage (x) des Tänzers des Tänzersystems (T, T1, T2, T3, T4) mittels einer Tänzerlageregelung geregelt wird, die eine zu einer für die Warenbahn vorgesehenen Rolle, insbesondere einem Wickler oder einer Infeed-Rolle, zugehörige Drehzahl (n) oder ein zugehöriges Drehmoment (M) kommandiert.

11. Kaskadenregelungssystem für eine Tänzer-basierte Bahnzugregelung, umfassend eine unterlagerte Geschwindigkeitsregelung zur Regelung einer Bewegungsgeschwindigkeit eines aktiven Tänzersystems (T, T1, T2, T3, T4), sowie eine der unterlagerten Geschwindigkeitsregelung überlagerte Zugkraftregelung zur Regelung einer Bahnzugkraft.

12. Kaskadenregelungssystem nach Anspruch 11, wobei die unterlagerte Geschwindigkeitsregelung einen Geschwindigkeitsregler, insbesondere einen P-Regler, PI-Regler oder einen PID-Regler, aufweist.

13. Kaskadenregelungssystem nach Anspruch 11 oder 12, wobei die überlagerte Zugkraftregelung einen Zugkraftregler, insbesondere einen P-Regler, PI-Regler oder einen PID-Regler aufweist.

14. Kaskadenregelungssystem nach einem der Ansprüche 11 bis 13, wobei ferner ein Tänzerlageregelungssystem vorgesehen ist.

15. Kaskadenregelungssystem nach einem der Ansprüche 11 bis 14, wobei das Tänzersystem (T, T1, T2, T3, T4) als elektrisch, pneumatisch und/oder hydraulisch aktuiertes Tänzersystem ausgebildet ist.

16. Kaskadenregelungssystem nach einem der Ansprüche 11 bis 15, wobei das Tänzersystem (T, T1, T2, T3, T4) als Aktuator einen Rotations- oder Linearmotor aufweist.
